# EUROPÄISCHE PATENTANMELDUNG

(11) **EP 3 263 491 A1**
(43) Veröffentlichungstag der Anmeldung: **03.01.2018**
(21) Anmeldenummer: 17001024.3
(22) Anmeldetag: 16.06.2017
(51) Int. Cl.: B65G 1/04, B65G 1/06

(54) **SCHIENENGEBUNDENER TRANSPORTROBOTER ZUR KOMMISSIONIERUNG VON WAREN IM LAGERREGAL UND VERFAHREN ZU DESSEN BETRIEB**

(30) Priorität: 30.06.2016 DE 102016008078
(71) Anmelder: SERVUS Intralogistics GmbH, 6850 Dornbirn (AT)
(72) Erfinder: Beer, Christian, 6858 Schwarzach (AT)
(74) Vertreter: Riebling, Peter

(57) **Zusammenfassung**

Verfahren zum Betrieb eines Transportroboters (1) in einem Lagerregal (27), welches mindestens eine horizontale Regalfahrstrecke (33-34) aufweist, der mindestens eine Lagerebene (35, 35a-35c) zugeordnet ist, auf der eine Vielzahl von Gegenständen in der Art von Gebinden und/oder Kartons (59, 61) und/oder Paletten (60) und/oder einzelne Verpackungseinheiten (25, 25a-25c) gelagert sind, wobei der Transportroboter (1) mindestens eine Arbeitsebene (53) aufweist, auf der mindestens ein Zielbehälter (6, 6a) gelagert ist, der mithilfe eines roboterseitigen Lademittels (8, 40, 44, 46) in der Art eines Pick & Place-Vorgangs mit den unterschiedlichen Gegenständen (25, 59, 60, 61) befüllbar ist, wobei
a.) in einem ersten Verfahrensschritt der Transportroboter (1) gegenüber einer gegenstandsfesten Markierung (62) in Gegenüberstellung zu dem zu kommissionierenden Gegenstand (25, 59, 60, 61) gebracht wird,
b.) dass in einem zweiten Verfahrensschritt der zu kommissionierende Gegenstand (25, 59, 60, 61) mit einem ersten roboterseitigen Lademittel (44) auf die Arbeitsebene (53) des Transportroboters (1) gezogen wird und dass c.) in einem dritten Verfahrensschritt der auf der Arbeitsebene (53) lagernde Gegenstand (25, 59, 60, 61) mit dem zweiten roboterseitigen Lademittel (22, 46, 47, 48, 50, 51) in den Zielbehälter (6, 6a) vereinzelt wird.

## Beschreibung

Die Erfindung betrifft einen schienengebundenen Transportroboter zur Kommissionierung von Waren in einem Kommissionierungslager nach dem Oberbegriff des Patentanspruchs 1.

Unter dem Begriff "Kommissionierung" wird das Zusammenstellen von bestimmten Teilmengen (Artikeln) aus einer bereitgestellten Gesamtmenge (Sortiment) aus einem Lagerregal aufgrund von Aufträgen verstanden. Dabei kann es sich um einen Kundenauftrag oder auch um einen Produktionsauftrag handeln. Die automatische Vorrichtung, die den Auftrag zusammenstellt, wird als Kommissionierer, Picker oder Greifer bezeichnet. Die Tätigkeit der Kommissionierung entspricht der Auslagerung vorgegebener Artikel zur Erstellung eines Auftrags, der aus einem oder mehreren Auftragspositionen besteht und die Menge jedes einzelnen Artikels angibt.

Die Teilmengen bestehen aus Artikeln, die aus dem Sortiment (=Gesamtmenge im Lagerregal) für einen Auftrag (=Bedarfsinformation) gesammelt werden.

Die Kommissionierung stellt den Übergang von der sortenreinen Lagerung zum sorten-unreinen Auftrag dar und beinhaltet folgende Grundfunktionen:
Bereitstellen der Waren
Fortbewegen des Kommissionierers
Entnehmen der Waren
Abgeben der Waren

Als Kommissioniertechniken sind folgende Arten bekannt:
Multi-Order-Picking: Es werden zur gleichen Zeit von einem Kommissionierer mehrere Aufträge bearbeitet.
Pick- und-Pack-System: Es werden die Artikel direkt in den Versandkarton kommissioniert und verpackt. Dazu ist eine auftrags- und artikelbezogene Volumenberechnung erforderlich, um den Versandkarton zu bestimmen.
[Quelle: Martin, Heinrich: Transport- und Lagerlogistik, 9. Auflage, Springer Vieweg 2014, Seite 396 ff.]

Ein Transportroboter mit einem Lademittel als Kommissionierer ist beispielsweise mit der WO 2016 014 917 A1 bekannt geworden. Bei dieser bekannten Anwendung handelt es sich um einen nicht-schienengebundenen Transportroboter, auf dessen Fahrgestell ein Mehrachsroboter als Lademittel aufgesetzt ist, der einen Saugarm oder Sauggreifer aufweist, mit dem er in der Lage ist, Gegenstände aus einem Lager zu entnehmen und aufzuladen.

Zu diesem Zweck führt der Transportroboter nach der WO 2016 014917 A1 einen Zielbehälter mit sich und ist in der Lage, mit seinem Sauggreifer in verschiedene Regalebenen eines Kommissionierregals hineinzugreifen, dort eine abgelegte Ware oder einen Gegenstand zu ergreifen und in den von ihm mitgetragenen Zielbehälter zu befördern.

Nach erfolgter Vereinzelungsaktion (Erfüllung der Pick-Aufgabe) fährt der Transportroboter mit dem aufgeladenen Zielbehälter aus dem Lagerregal heraus und lädt den Zielbehälter an einer Kommissionierstation ab.

Der Transportroboter kann deshalb keine Kommissionieraufgaben im Lagerregal ausführen. Er ist deshalb nicht geeignet, die Gegenstände oder Verpackungseinheiten im Lager "umzuräumen". Er kann beispielsweise nicht einen Gegenstand A von dem Lagerplatz X1, Y1, Z1 mit einem Gegenstand B vom Lagerplatz X2, Y2, Z2 zusammenführen und beide Gegenstände A+B auf einem dritten Lagerplatz X3, Y3, Z3 kontrolliert ablegen, um später diese Sachgesamtheit zuverlässig wieder zu finden und mit anderen Gegenständen vereinigen oder aus dem Lager heraus zu transportieren.

Die dort verwendete Kameratechnik ist kostenaufwendig, betriebsunsicher und ermöglicht nicht eine zuverlässige Lokalisation (Wiederauffindung) einer im Lagerregal einmal abgelegten Sachgesamtheit. Sie erfordert nämlich eine zuverlässige Mustererkennung sämtlicher Gegenstände, was mit hohem Software-Einsatz und langen Umschlagzeiten verbunden ist.

Entsprechend der Baugröße des Mehrachsroboters können auch nur jeweils maximal drei Regalebenen bedient werden, weil die Bauhöhe des Mehrachsroboters begrenzt ist. Es ist nicht möglich, einen Mehrachsroboter mit einer Bauhöhe von zum Beispiel 6 Metern auf einem solchen frei verfahrbaren Transportroboter anzuordnen, mit dem Ziel, die Greifhöhe zu verbessern, weil es dann zu Gewichts- und Gleichgewichtsproblemen beim Betrieb kommt. Die Greifgenauigkeit könnte dann nicht mehr ausreichen.

Die Verwendung eines Mehrachsroboters ist im Hinblick auf die notwendigen Kosten für den Bau, den Unterhalt und die Steuerung eines solchen Mehrachsroboters nachteilig.

Weiterer Nachteil ist, dass der Transportroboter auf außerhalb des Lagerregals angeordneten Fahrstraßen verkehrt. Wegen der dadurch notwendigen Baugröße ist eine Kommissionierung nur außerhalb des Lagerregals möglich.

Ferner ist nachteilig, dass eine aufwendige Kameraerkennung von in der Regalebene angeordneten Gegenständen voraus gesetzt wird. Es wird aber nur eine Kameraerkennung für den Ort des Regalplatzes durch optisch erkennbare Markierungen am Regalgrundträger ausgeführt, was die Positionierung des nur relativ unpräzise und frei geführten Transportroboters gegenüber dem Kommissionierregal erschwert. Er kann deshalb keine individuellen Gegenstände lokalisieren, sondern nur seinen Standort gegenüber dem Lagerregal.

Beispielsweise ist eine exakte Positionierung des bekannten Transportroboters gegenüber dem Kommissionierregal nicht möglich, weil der Transportroboter nicht auf einer schienengebundenen Ebene arbeitet, sondern frei im Raum bewegbar ist. Von seiner kamera-gestützten Standort-Erkennung sind daher drei voneinander unabhängige Raumachsen (X, Y, Z) zu bewältigen.

Weiterer Nachteil der Anordnung ist, dass dem Transportroboter nur eine einzige Fahrebene (nämlich der Erdboden) zur Verfügung steht und er deshalb nicht ein mehrstöckiges Kommissionierregal mit übereinander angeordneten Fahrebenen befahren kann.

Es fehlen also die Voraussetzungen für eine bessere Raumausnutzung eines Kommissionierregals und für die Schaffung mehrerer Lagerebenen, die beim Stand der Technik außerhalb der Greifweite des Mehrachsroboters liegen.

Wegen der ungenügend genauen Positionierung des bekannten Transportroboters gegenüber den einzelnen Pick-Positionen im Kommissionierregal sieht die genannte Druckschrift noch zusätzlich vor, dass am Transportroboter ein Nutzer-Interface vorhanden ist, mit dem es möglich ist, lokale Lade- und Entladeaufgaben durchzuführen und gegebenenfalls Korrekturen durchzuführen, um den Transportroboter nachträglich an einer bestimmten Lade- und Entladestation einzulernen.

Die Entnahme von Lagerbehältern aus dem Kommissionierregal mit dem Ziel, einen solchen Lagerbehälter auf den Transportroboter aufzuladen, dort die entsprechenden Kommissionieraufgaben durchzuführen und den Lagerbehälter wieder zurück an den Lagerplatz zu bringen, ist nicht vorgesehen.

Der bekannte Transportroboter mit dem darauf montierten Mehrachsroboter ist also darauf angewiesen, dass die Greifhöhe, die Greifrichtung und die Greiftiefe im Kommissionierregal ausreichen, um auch tief im Kommissionierregal angeordnete Gegenstände ergreifen zu können. Dies beschränkt aber den Einsatzzweck eines solchen bekannten Transportroboters.

Wenn man hingegen vorsehen würde, dass auch die hinteren Lagerplätze, die weit vom Greifarm entfernt sind, zuverlässig erkannt und erfasst werden können, müsste man große vertikale Abstände zwischen den Lagerebenen vorsehen, was zu einer ungünstigen Lagerdichte des Kommissionierregals führt.

Mit der US 2016 010 19 40 A1 ist ein weiteres Lagersystem bekannt geworden, bei dem ebenfalls ein auf der Erdbodenebene frei verfahrbarer Transportroboter mit aufgesetzten Mehrachsrobotern vorgesehen sind. Auch hier bestehen die gleichen Nachteile wie bei der vorgenannten Druckschrift. Zusätzlich besteht der weitere Nachteil, dass keine Gegenstände vereinzelt werden können, sondern nur Kommissionierkisten oder Teile von Kommissionierkisten mit darin angeordneten Gegenständen.

Mit dem Gegenstand der WO 2012 055410 A2 ist ein weiteres Kommissioniersystem mit einem Transportroboter und einem Mehrachsroboter bekannt geworden, wobei der Transportroboter hängend in der Mittelebene eines Lagersystems angeordnet ist und dort verfahrbar angetrieben ist. Es handelt sich um eine reine Stapelanordnung, bei der vorausgesetzt ist, dass in einer Reihe von gleichförmigen Behältern Gegenstände genau gleicher Art aufgestapelt werden.

Damit ist es nicht möglich, eine Vielfalt von unterschiedlichen Gegenständen oder Verpackungsbehältern sorten-unrein an unterschiedlichen Tiefenpositionen in einem Kommissionierregal anzuordnen.

Der Erfindung liegt deshalb ausgehend von der WO 2016 014 917 A1 die Aufgabe zugrunde, ein Verfahren zum Kommissionieren von Gegenständen direkt in einem Lagerregal vorzusehen.

Ein das Verfahren ausführender Transportroboter mit aufgesetztem Lademittel soll zur Kommissionierung von Gegenständen direkt im Lagerregal so weitergebildet sein, dass eine wesentlich bessere Ausnutzung des Lagerplatzes im Kommissionierregal möglich ist, und eine präzisere Arbeitsweise gewährleistet ist.

Zur Lösung der gestellten Aufgabe ist die Erfindung durch die technische Lehre des Anspruches 1 gekennzeichnet.

Merkmal des erfindungsgemäßen Verfahrens ist demnach, dass
a.) in einem ersten Verfahrensschritt der Transportroboter im Lagerregal gegenüber einer gegenstandsfesten Markierung in Gegenüberstellung zu dem zu kommissionierenden Gegenstand gebracht wird,
b.) dass in einem zweiten Verfahrensschritt der zu kommissionierende Gegenstand mit einem ersten roboterseitigen Lademittel auf die Arbeitsebene des Transportroboters gezogen wird und dass
c.) in einem dritten Verfahrensschritt der auf der Arbeitsebene lagernde Gegenstand mit dem zweiten roboterseitigen Lademittel in den Zielbehälter vereinzelt wird.

Vorteil des Merkmals a nach der Erfindung ist, dass nunmehr gegenstandsfeste Markierungen vom Transportroboter erfasst und ausgewertet werden und nicht mehr nur der Standort des Transportroboters gegenüber einer bestimmten Position im Lagerregal bestimmt ist. Damit besteht der Vorteil, dass es nun erstmals mit einfachsten Mitteln - ohne Verwendung von aufwendiger Kameratechnik - möglich ist, auch einzelne Gegenstände auf ihren Abstellplätzen im Lagerregal zu identifizieren, sofern diese Gegenstände mit einer geeigneten, berührungslos erfassbaren Markierung versehen sind.

Als Beispiel kann angegeben werden, dass eine Anzahl von Flaschen auf rasterartigen Abstellplätzen nebeneinander und hintereinander in der Lagerebene des Lagerregals angeordnet sind, und selbst gebindelos sind. Sie sind weder in einem Karton noch in einer anderen Umhüllung angeordnet und tragen lediglich - beispielsweise an der Frontseite - eine maschinenlesbare Erkennung.

Es kann sich zum Beispiel um Flaschen handeln, in denen ein Flüssiggewürz enthalten ist.

Mit dem patentgemäßen Verfahren ist es nun erstmals möglich, jeden Standort jedes einzelnen Gegenstandes im Lagerregal zu erfassen, weil der Transportroboter eine berührungslose Erkennung der Markierung des jeweiligen Gegenstandes ausführt, sodass jeder auf der Lagerebene des Lagerregals abgestellte Gegenstand individuell erkennbar ist. Somit ist es möglich, den genauen Ort (die Ortskoordinaten) jedes in der Lagerebene abgestellten, individuellen Gegenstandes zu erfassen, abzuspeichern und den Lagerregaldaten hinzuzufügen. Es wird also ständig ein Lagerregalverzeichnis geführt, in dem genau angegeben ist, an welcher X-Y-Z-Position ein individueller Gegenstand abgestellt ist.

Selbstverständlich ist die Erfindung nach dem Verfahrensmerkmal a nicht auf die individuelle Erfassung von einzelnen Gegenständen, wie zum Beispiel Dosen, Flaschen oder dergleichen Behälter beschränkt. Es kann in einer anderen Ausgestaltung vorgesehen sein, dass stattdessen vollständige Gebinde erkannt werden. In diesem Fall trägt das Gebinde, zum Beispiel der Karton, die Palette oder dergleichen, eine individuell erkennbare, berührungslos erfassbare Markierung.

In einer dritten Ausgestaltung kann es vorgesehen sein, dass die individuell zu vereinzelnden Gegenstände, insbesondere Flaschen, Dosen oder dergleichen zwar in einem Karton rasterartig, stehend und von der Frontseite her erkennbar aufbewahrt sind, dass aber die Stirnwand des Kartons oder eines anderen Gebindes mindestens teilweise entfernt ist, sodass jeder individuelle Gegenstand über die geöffnete Stirnwand aus dem Karton entnommen und auf die Arbeitsebene des Transportroboters befördert werden kann.

Dabei bedarf es nicht einer individuellen Erkennung des im Karton oder Gebinde angeordneten Gegenstands, denn dessen Standort im Karton oder Gebinde ist bekannt, weil der Gegenstand in einem Rastermaß im Karton oder Gebinde steht und die Art des Rastermaßes der Steuerung des Transportroboters bekannt ist.

Nach dem Merkmal b wird es bevorzugt, wenn der zu kommissionierende Gegenstand mit einem ersten roboterseitigen Lademittel auf die Arbeitsebene des Transportroboters gezogen wird.

Vorteil dieser Maßnahme ist, dass lediglich ein "Ziehen" vorgesehen ist, was bedeutet, dass das erste roboterseitige Lademittel besonders einfach ausgebildet sein kann, denn es gestattet nur ein Ziehen eines erfassten Kartons oder Gebindes aus dem Lagerregal in einer horizontalen Ebene, und es bedarf keines aufwendigen Mehrachs-Roboters, wie es beim Stand der Technik der Fall ist.

Ein lediglich in Zugrichtung (horizontaler Richtung) arbeitendes, roboterseitiges Lademittel hat den weiteren Vorteil, dass es keine Greifhöhe in vertikaler Richtung beansprucht, was bedeutet, dass das Lademittel in einer einfachen Ausführungsform als horizontal bewegbarer Schiebe- oder Greif- oder Lagerarm ausgebildet sein kann, sodass man mit einem solchen einfachen, lediglich in horizontaler Richtung - möglicherweise auch teleskopartig verschiebbaren - Lademittel die Möglichkeit hat, nun sehr große Ladetiefen im Lagerregal zu überwinden. Es können damit Greiftiefen bis zu 2 Meter bei niedrigster Ladehöhe verwirklicht werden, was mit einem bekannten Mehrachs-Roboter als Aufsatz auf einem Transportroboter nicht möglich ist.

Das dritte Merkmal c erlaubt die Kommissionierung des auf die Arbeitsebene des Transportroboters aufgezogenen Gegenstandes direkt auf dem Transportroboter.

Unter dem Begriff "Gegenstand" wird im Rahmen der vorliegenden Erfindung verstanden, dass es sich um einzelne individuelle Gegenstände (Artikel) handeln kann, wie zum Beispiel Flaschen, Dosen und andere Behälter, oder dass unter dem Begriff "Gegenstand" auch bestimmte Umverpackungen verstanden werden, wie zum Beispiel Kartons, Paletten, Gebinde und dergleichen, in denen eine Vielzahl gleichartiger Einzelgegenstände angeordnet ist.

Wenn nunmehr der zu kommissionierende Gegenstand auf die Arbeitsebene des Transportroboters aufgezogen ist, wird es bevorzugt, wenn ein zweites roboterseitiges Lademittel zur Kommissionierung vorhanden ist.

Dies bedeutet, dass erfindungsgemäß das zweite Lademittel als Kommissioniervorrichtung ausgebildet ist, was bisher noch nicht bekannt war.

Die bisherigen Transportroboter hatten nur Mehrachs-Roboter als Pick-und-Place-Vorrichtung aufgesattelt, was mit den eingangs beschriebenen Nachteilen verbunden war.

Da nunmehr erfindungsgemäß das zweite Lademittel als Kommissioniervorrichtung ausgebildet ist, ist es damit nunmehr erstmals möglich, auf der Arbeitsebene des Transportroboters die Kommissionierung selbst direkt im Lagerregal durchzuführen.

Dies setzt voraus, dass auf der Arbeitsebene des Transportroboters mindestens ein Zielbehälter angeordnet ist und ein Abstellplatz definiert wird, auf dem die zu kommissionierende Ware lagert.

Die roboterseitige Kommissioniervorrichtung führt dann die Kommissionierung von den auf die Arbeitsebene des Transportroboters aufgezogenen Gegenständen in den gleichfalls auf der Arbeitsebene angeordneten mindestens einen Zielbehälter selbsttätig durch.

In einer besonders einfachen und bevorzugten Ausführungsform ist die Kommissioniervorrichtung als lineares X-Y-Z-Schlittensystem ausgebildet. Es bedarf somit keines aufwendigen Mehrachs-Roboters, sondern es ist ein einfaches lineares X-Y-Z-System vorhanden, an dem ein möglicherweise noch drehbar angetriebenes Vereinzelungsmittel angeordnet ist. Ein solches Vereinzelungsmittel kann ein Sauggreifer, ein mechanischer oder elektromagnetischer oder magnetischer Greifer sein.

Es kann sich auch um ein Vereinzelungsmittel handeln, welches in der Lage ist, mehrere Gebinde, die auf der Arbeitsebene des Transportroboters abgestellt sind, und die nach oben offen sind und ein zu vereinzelndes Füllmaterial enthalten, in den Zielbehälter zu befördern.

Somit können auch neben einzelnen Artikeln auch Schüttgüter vom Transportroboter mit der erfindungsgemäßen Kommissioniervorrichtung direkt im Lagerregal kommissioniert werden.

Bei der erfindungsgemäßen technischen Lehre ist demnach entscheidend, dass der Transportroboter selbsttätige Kommissionieraufgaben in einem Lagerregal mit hoher Lagerdichte und hohem Füllfaktor ausführen kann. Er kann sozusagen mit einem Kommissionierauftrag in das Lagerregal geschickt werden und führt dort selbsttätig die Kommissionieraufgaben aus, ohne dass er dabei das Lagerregal verlassen muss. Er kann sozusagen mit einem entsprechenden Kommissionierauftrag das Lager "umräumen". Es bedarf keiner weiteren Steuerung oder weiterer Kontrollfunktionen, weil er vollkommen autonom arbeitet, und die lediglich über eine Funkschnittstelle enthaltenen Kommissionieraufträge selbsttätig abarbeitet.

Selbstverständlich ist die Erfindung nicht auf einen einzigen Transportroboter mit Kommissionierfunktion beschränkt. Es ist in einer Weiterbildung vorgesehen, dass eine Vielzahl von unabhängig (autonom) arbeitenden Transportrobotern mit Kommissionierfunktion auf der gleichen oder auf unterschiedlichen Lagerebenen eines Lagerregals arbeiten. Von besonderem Vorteil ist, dass jeder Transportroboter autonom seinen Kommissionierauftrag abarbeitet, der in seiner zentralen Steuereinheit gespeichert ist und dabei nicht auf die Entgegennahme weiterer Steuerungsanweisungen während der Kommissionierarbeit im Regal angewiesen ist. Um Kollisionen mit gleichzeitig auf gleicher Ebene arbeitenden weiteren Kommissionierrobotern zu vermeiden, können diese untereinander Daten austauschen, die den Fahrweg, die Fahrzeit, die Kommissionierzeit, den Kommissionierauftrag und andere Parameter beinhalten können.

Die Erfindung sieht in einer anderen Ausführungsform vor, dass als Kommissioniervorrichtung ein Mehrachs-Roboter verwendet wird, wobei jedoch die erstgenannte Ausbildung der Kommissioniervorrichtung als X-Y-Z-Schlittensystem bevorzugt wird.

Der Transportroboter ist im Vergleich zum Stand der Technik nunmehr schienengebunden und trägt auf seinem Fahrwerk mindestens einen Zielbehälter.

Auf dem Fahrwerk ist mindestens ein Lademittel angeordnet. Er ist einem mehrstöckigen Kommissionierregal zugeordnet, welches sich dadurch auszeichnet, dass ein mindestens eingangsseitiger Hublift vorhanden ist, der in der Lage ist, den schienengebundenen Transportroboter auf verschiedene Regalfahrstrecken im Kommissionierregal zu befördern.

Mit der gegebenen technischen Lehre ergibt sich nunmehr der Vorteil, dass der Transportroboter mit aufgesetztem Lademittel zur selbsttätigen, schnellen Kommissionierung von Waren in einem mehrstöckigen Kommissionierregal geeignet ist, weil er mit einem mindestens eingangsseitig angeordneten Hublift auf verschiedene, vertikal übereinander angeordnete und parallel zueinander befindliche Regalfahrstrecken befördert werden kann.

Er ist somit in der Lage, in einem mehrstöckigen Kommissionierregal mehrere unterschiedliche Regalfahrstrecken zu befahren, die vertikal übereinander und/oder nebeneinander angeordnet sind. Es können von jeweils einer Regalfahrstrecke mehrere Lagerebenen mit dort gelagerten Gegenständen angefahren werden. Somit ist auf engstem Raum eine Kommissionierung von Gegenständen in einem solchen Lagerregal möglich.

Zwar wurde als bevorzugtes Ausführungsbeispiel ein kameraloses Erkennungssystem beschrieben. In einer anderen Ausführung kann jedoch auch ein kameragebundenes System verwendet werden. Jede Position des in der Lagerebene abgestellten Gegenstandes kann mit einem dreidimensionalen Kamerasystem erkannt werden. Beim Bestücken des mehrstöckigen Kommissionierregals wird die jeweilige Standposition vom vollautomatisch arbeitenden Transportroboter festgestellt und gemerkt, sodass jedem gelagerten Gegenstand entweder über die Kameraerkennung oder die artikelbezogene Markierung eine eindeutige und wiederholbare Lade- und Entladeposition zugeordnet ist.

Diese Lade- und Entladeposition kann mit höchster Präzision angefahren werden, denn aufgrund des schienengebundenen Transportroboters wird erstmals der Vorteil erreicht, dass unabhängig von fahrbahnseitigen Unebenheiten - wie bei Erdboden-gebundenen Transportrobotern - nunmehr eine präzise Lokalisierung des Transportroboters in Bezug zu dem jeweils auf eine bestimmte Lade- und Entladeposition angeordneten Gegenstand gewährleistet ist.

Ein solcher Gegenstand kann sehr klein sein. Es kann vorgesehen sein, dass es sich um einzelne Gegenstände handelt, die in der Größe einer Konservendose sind oder sogar kleiner, oder dass es sich um Einzelteile handelt, wie zum Beispiel um Bohrer, Fräser, Meißelwerkzeuge oder dergleichen, die in geeigneten Kunststoffverpackungen im Regal getrennt voneinander angeordnet sind und deshalb auch getrennt voneinander anfahrbar sind. Wie oben ausgeführt, kann - bei Wegfall der kameragebundenen Erkennung - jeder Gegenstand mit einer elektronischen und/oder optisch erkennbaren Markierung versehen sein, um die genaue Lokalisierung von Seiten des Transportroboters zu ermöglichen.

Es wird durch das mehrstöckige Kommissionierregal eine hohe Lagerdichte erreicht, denn die einzelnen Lagerebenen können dicht übereinander angeordnet sein, weil sie im Prinzip nur so weit voneinander in vertikaler Richtung beabstandet sein müssen, dass die dort abzustellenden Gegenstände nicht mit der darüber liegenden Lagerebene kollidieren.

Es wird demnach eine hohe Lagerdichte erzielt, und der Transportroboter mit seinem aufgesetzten ausschließlich horizontal verschiebbaren Lademittel kann sehr tief in die Lagerebene eingreifen.

Das erste Lademittel kann dabei an seinem freien Ende einen Sauggreifer aufweisen, der parallel zur Lagerebene in diese hinein bewegbar angetrieben ist.

In einer anderen Ausführung kann das erste Lademittel als einfacher, horizontal verschiebbarer Ladearm ausgebildet sein und der Sauggreifer ist dann über ein zweites Lademittel bewegbar angetrieben und nur noch über der Lagerebene des Transportroboters verschiebbar und absenkbar angetrieben.

In beiden Fällen können mit dem ersten Lademittel, das lediglich in horizontaler Richtung auf Schub- und Zug angetrieben ist Lagertiefen bis zu einer Tiefe von 1000 mm bewältigt werden, wobei auf einer derartigen Tiefe bis zu zehn Reihen von Gegenständen hintereinanderliegend in einer horizontalen Ebene angeordnet werden können.

Damit ergibt sich eine optimale Ausnutzung der Lagerebenen eines Kommissionierregals bei höchster Präzision der Identifizierung des Standpunktes des jeweiligen abgestellten Gegenstandes.

Nach einem weiteren Merkmal der vorliegenden Erfindung, welches unabhängig von den vorgenannten Merkmalen Schutz genießen soll, ist vorgesehen, dass der Transportroboter mit dem aufgesetzten Lademittel so ausgebildet ist, dass der Transportroboter in der Lage ist, einen Lagerbehälter aus der jeweiligen Lagerebene des Kommissionierregals herauszunehmen, auf sein Fahrwerk aufzuladen und dort mithilfe des Lademittels die in dem Lagerbehälter enthaltenen Gegenstände zu entnehmen, und in den gleichfalls auf dem Fahrwerk des Transportroboters aufgesetzten Zielbehälter einzulegen.

Nach diesem Ausführungsbeispiel der Erfindung ergibt sich dadurch der Vorteil, dass in dem Lagerbehälter, der durch das erste Lademittel entnommen wird und auf das Fahrwerk des Transportroboters aufgezogen wird, auch Schüttgut enthalten sein kann. Es kann sich hierbei um schüttgutfähige Güter handeln, wie zum Beispiel Granulate, Kunststoffteile, elektrische Bauteile und dergleichen mehr, die schüttgutfähig sind.

Damit ist es erstmals möglich, dass das zweite Lademittel mit seinem Saugmundstück die schüttgutfähigen Gegenstände aufnimmt und auf der gleichen Ebene auf dem benachbart auf dem Fahrwerk des Transportroboters angeordneten Zielbehälter aufgibt.

Neben der Vereinzelung und Kommissionierung von einzelnen separaten Gegenständen können somit auch Schüttgüter kommissioniert werden, was beim Stand der Technik nicht möglich war.

Ein weiterer Vorteil der Erfindung ist dadurch gegeben, dass durch die Möglichkeit der Entnahme von einzelnen, auf der Lagerebene des Kommissionierregals angeordneten Lagerbehältern nunmehr auch eine sehr hohe Lagerdichte erzielt werden kann, denn es ist nicht mehr notwendig, dass der Transportroboter mit seinem Sauggreifer bis in die hinterste Ebene des Kommissionierregals kommt, weil er jeweils den Lagerbehälter von der Ebene im Lagerregal abziehen, auf sein Fahrwerk aufziehen und die dort in dem Lagerbehälter angeordneten Gegenstände in dem gleichfalls auf dem Fahrwerk angeordneten Zielbehälter vereinzeln kann.

In einer Weiterbildung der Erfindung ist es vorgesehen, dass es die auf dem Fahrwerk des Transportroboters angeordneten zweiten Lademittel ermöglichen, selbstständig mit schienenartigen Greif- oder Zug- oder Transportwerkzeugen in das Kommissionierregal hineinzufahren, dort den Behälter zu erfassen und auf den Transportroboter aufzuziehen. Es ist somit nicht mehr ein hoch bauender Mehrachsroboter zur Erfüllung dieser Lade- und Entladefunktionen erforderlich, sondern das auf dem Fahrwerk des Transportroboters selbst angeordnete Lademittel führt diese Lade- und Entladefunktion eines im Kommissionierregal angeordneten Lagerbehälters aus.

Damit wird der Vorteil noch einer weiteren Reduzierung der Lagerhöhe erreicht, weil der Abstand der einzelnen Lagerebenen nur noch so groß sein muss, wie es der Höhe eines Lagerbehälters entspricht.

Die letztgenannte Möglichkeit - der Anordnung eines eigenen Lademittels auf dem Transportroboter - wird vor allem bei hochgewichtigen Lagerbehältern bevorzugt, die ein Gewicht von zum Beispiel 35 kg überschreiten.

Ein relativ kleiner und raumsparender Mehrachsroboter, der erfindungsgemäß auf dem Transportroboter angeordnet ist, würde eine derartige Lade- und Entladeaufgabe mit solchen schweren Ladebehältern nicht ausführen können. Aus diesem Grund ist ein eigenes Lade- und Entlademittel auf dem Transportroboter vorgesehen.

Ein solches Lade- und Entlademittel kann aus zwei zueinander parallelen, teleskopierbar angetriebenen Schienen bestehen, die in der ausgezogenen Teleskopstellung in die Lagerebene hineinfahren, dort den zu ergreifenden Behälter seitlich erfassen oder untergreifen, und dann herausziehen.

Es kann sich auch um ein in Querrichtung zur Fahrtrichtung des Transportroboters verschiebbar angetriebenes Förderband handeln, welches in die Lagerebene hineinfährt.

In einer anderen Ausführung kann das Lade- und Entlademittel aus Greif- oder Saugzangen bestehen, die teleskopierbar auf dem Transportroboter angeordnet sind und in der Lage sind, den auf der Lagerebene befindlichen Lagerbehälter herauszuziehen und auf die Oberfläche des Transportroboters aufzulegen und nach erfolgter Kommissionierung wieder auf die Lagerebene zurück zu befördern.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Soweit einzelne Gegenstände als "erfindungswesentlich" oder "wichtig" bezeichnet sind, bedeutet dies nicht, dass diese Gegenstände notwendigerweise den Gegenstand eines unabhängigen Anspruches bilden müssen. Dies wird allein durch die jeweils geltende Fassung des unabhängigen Patentanspruches bestimmt.

Es zeigen:
Figur 1: Seitenansicht eines Transportroboters in seiner Fahrstellung
Figur 2: Die Draufsicht auf Figur 1
Figur 3: die perspektivische Ansicht von Fig. 1 und 2
Figur 4: die Seitenansicht auf ein Lagerregal mit Darstellung von zwei verschiedenen Betriebsstellungen des Transportroboters.
Figur 5: die Draufsicht auf den Transportroboter bei der Gegenstandserkennung im Lagerregal
Figur 6: die Seitenansicht der Figur 5
Figur 7: die Seitenansicht eines Ausführungsbeispiels, bei dem der Mehrachsroboter die Kommissionierung durchführt
Figur 8: die Draufsicht auf Figur 7
Figur 9: die Seitenansicht eines gegenüber Figur 7 abgewandelten Ausführungsbeispiels
Figur 10: die Draufsicht auf Figur 9
Figur 11: ein Transportroboter mit aufgesetzter Kommissioniervorrichtung in Stirnansicht
Figur 12: der Transportroboter mit Kommissioniervorrichtung in perspektivischer Ansicht in einem ersten Verfahrenszustand
Figur 13: der Transportroboter nach Figur 12 in Stirnansicht bei der Kommissionierung im Lagerregal
Figur 14: der Transportroboter nach Figur 13 in Draufsicht
Figur 15: perspektivische Ansicht des Transportroboters in einem zweiten Verfahrenszustand im Vergleich zu Figur 12
Figur 16: der Transportroboter nach Figur 15 in einem dritten Verfahrenszustand
Figur 17: der Transportroboter nach Figur 16 in einem dritten Verfahrenszustand
Figur 18: der Transportroboter nach Figur 17 in Stirnansicht
Figur 19: der Transportroboter nach Figur 18 in Draufsicht

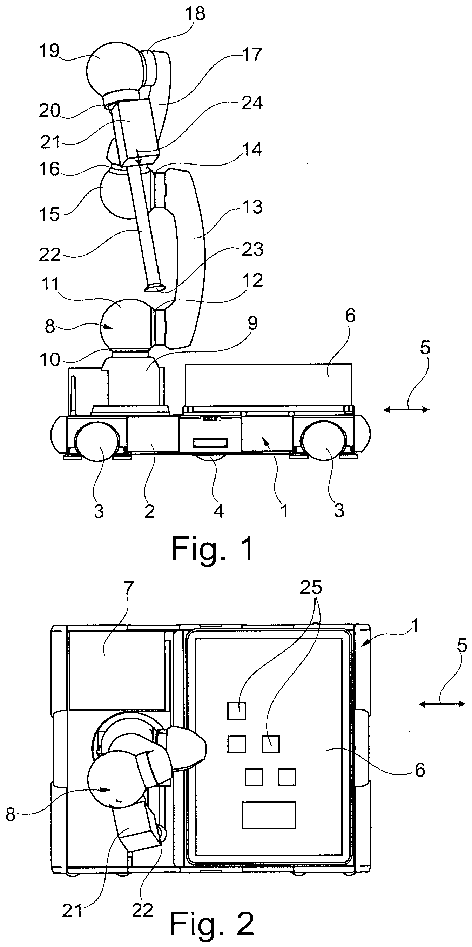

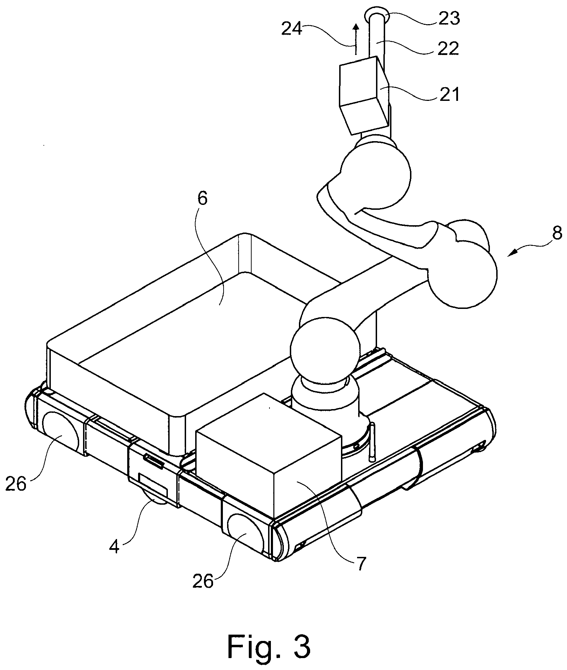

In den Figuren 1 bis 3 ist allgemein ein Transportroboter 1 gemäß der Erfindung dargestellt, der im Wesentlichen aus einem Fahrwerk 2 besteht, an dessen einen Seite synchron angetriebene Antriebsräder 3 vorhanden sind, während auf der gegenüberliegenden Seite lediglich Abdeckungen 26 (siehe Figur 3) und ein die Fahrstrecke abtastendes Wegmessrad 4 angeordnet sind.

Das Wegmessrad 4 ist auf der Seite der Abdeckungen 26 (siehe Figur 3) etwa mittig angeordnet und ist geeignet, den Fahrweg des Transportroboters 1 auf der Schiene entfernungsabhängig zu erfassen, und über eine Funkschnittstelle (z.B. nach dem ZigBee-Standard) einem nicht näher dargestellten zentralen Computersystem mitzuteilen.
ZigBee ist eine Spezifikation für drahtlose Netzwerke mit geringem Datenaufkommen, wie z. B. Hausautomation, Sensornetzwerke, Lichttechnik. Der Schwerpunkt von ZigBee liegt in kurzreichweitigen Netzwerken (10 bis 100 Meter). Es sind aber auch Reichweiten von mehreren Kilometern möglich.

Der gesamte Transportroboter 1 ist gemäß den nur beispielhaft genannten Patentanmeldungen (z.B. DE 10 2007 005 029 B1 oder DE 10 2005 012 561 A1) des gleichen Erfinders autonom verfahrbar, wird von einem zentralen Steuerungssystem gesteuert, und bekommt von dem zentralen Steuerungssystem lediglich Fahraufträge, die er aber aufgrund seiner autonomen Intelligenz selbstständig ausführt.

Er ist demnach auf einem Schienensystem in den Pfeilrichtungen 5 selbsttätig verfahrbar, und auf seinem Fahrwerk 2 ist mindestens ein erster Zielbehälter 6 angeordnet, der zur Aufnahme von unterschiedlichen Verpackungseinheiten 25 geeignet ist.

Auf dem Fahrwerk 2 ist mindestens ein Mehrachsroboter 8 angeordnet, der aus verschiedenen Drehkränzen besteht, sodass insgesamt bevorzugt ein Sechsachs-Roboter verwirklicht wird. Hierauf ist die Erfindung nicht beschränkt. Es kann anstatt eines Sechsachs-Roboters auch jeder beliebige andere Mehrachs-Roboter verwendet werden.

Es ist auch möglich, sogenannte Skalar-Roboter zu verwenden, die in einer anderen Arbeitsweise arbeiten als der hier dargestellte Mehrachs-Roboter. Es kann auch eine Kombination von einem Skalar-Roboter mit einem Mehrachsroboter vorsehen sein, wobei der Skalar-Roboter als erstes Lade- und Entlademittel aufgrund seiner präzisen Arbeitsweise die Regalbedienung (Laden und Entladen von Gegenständen) im Regal durchführt und dann den mitgeführten Mehrachsroboter als zweites Lade- und Entlademittel "füttert", der seinerseits die Kommissionierung auf dem Transportroboter ausführt.

Bezüglich des Mehrachsroboters 8 ist auf dem Fahrwerk 2 des Transportroboters 1 ein fahrwerkseitiger Ständer 9 befestigt, der über einen ersten Drehkranz 10 in ein erstes Zwischenglied 11 übergeht.

Das erste Zwischenglied 11 geht über einen, in senkrechter Richtung zum ersten Drehkranz 10 ausgebildeten Drehkranz 12 über, an dem ein weiteres Zwischenglied 13 ansetzt. Dieses geht in einen, im Winkel von 90 Grad versetzt angeordneten weiteren Drehkranz 14 über, der in ein weiteres Zwischenglied 15 mündet. Dieses geht in einen Drehkranz 16 über, der in ein Zwischenglied 17 mündet, und am Zwischenglied 17 ist ein Drehkranz 18 angeordnet, der mit dem Zwischenglied 19 in einer Drehverbindung ist.

Am Zwischenglied 19 ist ein weiterer Drehkranz 20 angeordnet, an dessen freien Ende ein Kamerasystem 21 angeordnet ist, welches eine Blickrichtung 24 in Richtung auf den am Drehkranz 20 drehbar angeordneten Sauggreifer 22 ermöglicht.

Am vorderen Ende des Sauggreifers 22, welches als möglicherweise teleskopierbares Rohr ausgebildet ist, ist eine Saugmündung 23 angeordnet, die durch einen manschettenartigen Gummiabschluss gekennzeichnet ist.

Auf diese Weise kann auch bei schrägem Aufsetzen der Saugmündung 23 auf einen Gegenstand noch eine Saug-Greifaktion gewährleistet werden.

Zur Versorgung des Sauggreifers 22 mit Unterdruck ist auf dem Fahrwerk 2 ein Vakuumaggregat 7 angeordnet.

Anstatt eines Sauggreifers 22 können selbstverständlich nach der Erfindung auch andere Greifsysteme verwendet werden, insbesondere mechanische Greifsysteme, die mit Elektromagnet-Zangen oder mit anderen mechanischen, elektrischen oder elektromagnetischen Greifsystemen arbeiten.

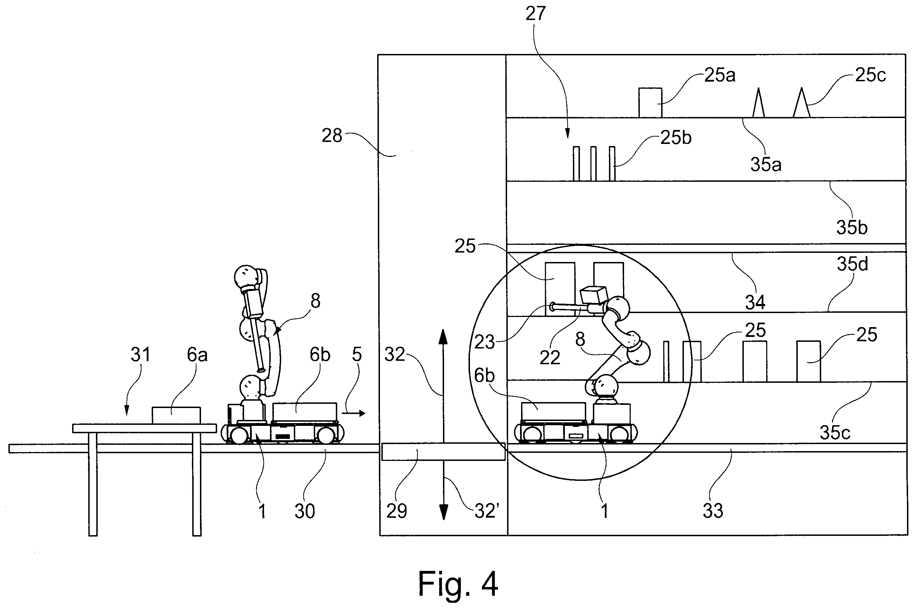

Die Figuren 2 und 3 zeigen den erfindungsgemäßen Transportroboter 1 mit dem aufgesetzten Mehrachsroboter 8 in verschiedenen Ansichten, und in Figur 4 ist ein erster Einsatzfall dargestellt.

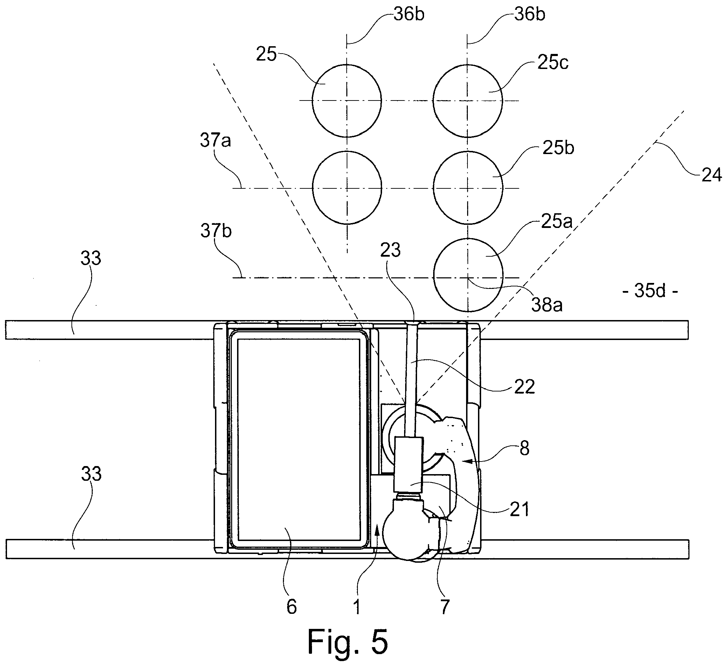

Vor einem Lagerregal 27, welches als Kommissionierregal ausgebildet ist, ist eine Ein- und Ausschleusungsstrecke in der Art einer Fahrstrecke 30 angeordnet, die gemäß Figur 5 aus zueinander beabstandeten Schienen besteht, auf denen der Transportroboter 1 frei in den Pfeilrichtungen 5 und in Gegenrichtung hierzu fährt.

Außerhalb des Lagerregals 27 ist auf der Fahrstrecke 30 eine Abgabestelle 31 vorgesehen, in der einzelne Zielbehälter 6, 6a abgelegt und aufgenommen werden.

Im gezeigten Ausführungsbeispiel hat der Transportroboter 1 einen Zielbehälter 6b aufgeladen und fährt damit in Pfeilrichtung 5 über die eingangsseitige Fahrstrecke 30 in einen Hublift 28, der im Wesentlichen aus einer Hubplattform 29 besteht, die in den Pfeilrichtungen 32, 32' verfahrbar angetrieben ist. Er kann somit von der Hubplattform 29 auf verschiedene Regalfahrstrecken 33, 34 im Lagerregal 27 befördert werden.

Es kann auch vorgesehen sein, dass der Hublift 28 sowohl eingangs- als auch ausgangsseitig am Lagerregal 27 angeordnet ist.

Im gezeigten Ausführungsbeispiel fährt der Transportroboter 1 auf die untere Regalfahrstrecke 33 und ist somit in der Lage, mindestens zwei oder auch mehr als zwei übereinanderliegende Lagerebenen 35c, 35d zu bedienen.

Gleiches gilt für die obere Regalfahrstrecke 34, welche einen Zugriff auf die Lagerebenen 35a, 35b bietet.

Das hier gezeigte Ausführungsbeispiel zeigt lediglich zwei übereinanderliegende Lagerebenen 35. Darauf ist die Erfindung nicht beschränkt. Es kann auch eine Vielzahl von weiteren Lagerebenen übereinander angeordnet sein, wobei der geringe Abstand zwischen den Lagerebenen 35 kennzeichnend für die Erfindung ist.

Auf der jeweiligen Lagerebene 35d, 35c sind einzelne Verpackungseinheiten voneinander räumlich getrennt in genau festgelegter Position abgestellt. Es bedarf also nicht der Abstellung von Verpackungskästen oder von Lagerkästen, sondern die Gegenstände können selbst abgestellt werden, was den Lagerdurchsatz stark beschleunigt.

Es kann also auf Lagerbehälter bei der ersten Ausführungsform gemäß den Figuren 1 bis 5 überhaupt verzichtet werden, was eine einfachere Handhabung gewährleistet.

Im gezeigten Ausführungsbeispiel nach den Figuren 4 und 5 ist demnach der Transportroboter 1 an der Position gemäß Figur 5 in das Lagerregal 27 gefahren. Zur Aufnahme von auf der Lagerebene 35d vereinzelt angeordneten Verpackungseinheiten 25a-25c wird nun in einer ersten Ausführung der Erfindung ein Kamerasystem 21 betrieben, welches mit dem Blickwinkel 24 alle dort erreichbaren Verpackungseinheiten 25 dreidimensional erfasst und deren Abstand und Tiefe feststellt. Die Auswertung erfolgt in einem digitalen Programm der Mustererkennung, dessen Ergebnisse über die Funkschnittstelle dem Steuerungsrechner des Transportroboters mitgeteilt werden.

Auf diese Weise wird durch eine automatische Bilderkennung erfasst, dass zum Beispiel die vordere Verpackungseinheit 25a im Schnittpunkt der beiden Positionslinien 36d, 37b angeordnet ist und ferner die Verpackungseinheit 25b in der Ebene dahinter, nämlich im Schnittpunkt der Positionslinie 37a mit der Positionslinie 36b.

Auf diese Weise wurde bereits schon beim Bestücken der Lagerebene 35d mit dem Kamerasystem und der automatischen Positionserfassung im Transportroboter die Standposition 38 festgelegt und wird dann nicht mehr geändert. Somit ist wiederholbar festgelegt, dass die Verpackungseinheit 25a genau an der Standposition 38a angeordnet ist, während die anderen Verpackungsbehälter an den Standpositionen 38b und 38c genau wiederholbar lokalisierbar sind.

Aufgrund der Schienengebundenheit des Transportroboters in der Regalfahrstrecke 33 ist somit eine hohe Wiederholgenauigkeit der Positionsermittlung der einzelnen Standpositionen 38a-c gewährleistet, was bei frei auf dem Erdboden verfahrbaren Transportrobotern nicht mit dieser Genauigkeit möglich ist. Die Wiederholgenauigkeit liegt im Bereich von < 2 mm.

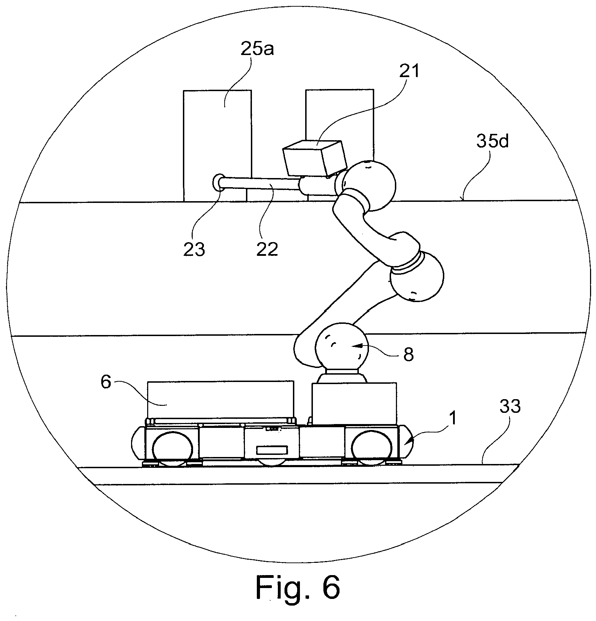

Die Figur 6 zeigt im Vergleich zu Figur 4 einen Ausschnitt, bei dem die gleichen Gegenstände mit den gleichen Bezugszeichen versehen sind. Es ist in Figur 6 dargestellt, dass die Saugmündung 23 des Sauggreifers 22 nunmehr auf eine Verpackungseinheit 25a aufgesetzt ist, und diese dann nachfolgend mit dem Mehrachsroboter 8 in den Zielbehälter 6 befördert wird.

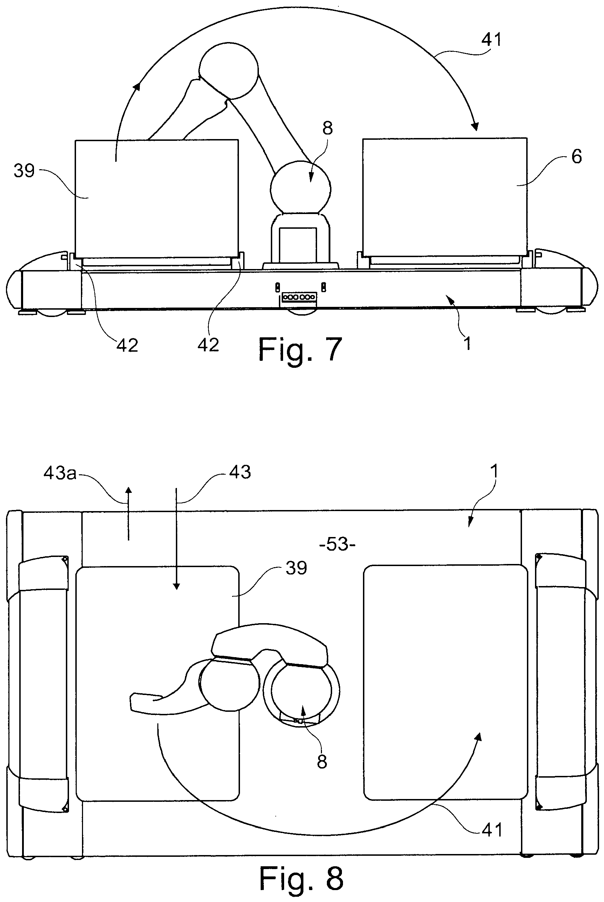

Die Figuren 7 bis 10 zeigen ein weiteres Ausführungsbeispiel der Erfindung, welches im Vergleich zu dem vorhergehenden Ausführungsbeispiel gesonderten Schutz, aber auch in Kombination mit dem vorher genannten Ausführungsbeispielen Schutz genießen soll.

Im Unterschied zu dem vorgenannten Ausführungsbeispiel nach den Figuren 1 bis 6 zeigen die Figuren 7 bis 10, dass der Transportroboter 1 auch die Möglichkeit hat, aus der Lagerebene 35 des Lagerregals 27 jeweils an der speziellen Standposition 38a-c einen Lagerbehälter 39 herauszuziehen und auf sein Fahrwerk 2 aufzuziehen.

Der auf das Fahrwerk 2 des Transportroboters 1 aufgezogene Lagerbehälter wird mithilfe von Seitenführungsmitteln 42 positionsgenau gehalten. Diese Seitenführungsmittel 42 können seitliche Anschlagleisten oder die Reibung vermindernde Gleit- oder Kugelführungen sein.

Nunmehr ist es möglich, aus dem auf dem Transportroboter 1 aufgezogenen Lagerbehälter 39 die dort gelagerten Gegenstände zu entnehmen und in Pfeilrichtung 41 (Einlegerichtung) in den Zielbehälter 6 zu befördern, der ebenfalls auf dem Fahrwerk des Transportroboters 1 angeordnet ist.

Der Mehrachsroboter 8 führt also Vereinzelungsaufgaben in der Art einer Kommissionierung durch, indem die in dem Lagerbehälter 39 angeordneten Gegenstände in den Zielbehälter befördert werden, wobei beide Behälter auf dem Fahrwerk 2 des Transportroboters 1 angeordnet sind.

Es versteht sich von selbst, dass nicht nur ein einziger Lagerbehälter auf die Oberfläche des Transportroboters 1 aufgezogen werden kann, sondern es können auch mehrere Lagerbehälter aufgezogen werden, die dann von dem Mehrachsroboter 8 bedient werden, der dann die einzelnen Gegenstände aus den mehrfachen Lagerbehältern entnimmt und in den einen oder mehrere Zielbehälter 6 hineinbringt.

Auf diese Weise wird es erstmals möglich, dass der Transportroboter 1 selbsttätig Kommissionieraufgaben im Lagerregal 27 durchführt, was im Stand der Technik nicht der Fall war.

Ein besonderer Vorteil besteht auch darin, dass, wenn im Lagerbehälter 39 Schüttgut angeordnet ist, dann dieses Schüttgut einfach in Pfeilrichtung 41 in den Zielbehälter in der erforderlichen Menge gefördert werden kann, was bisher noch nicht möglich war.

Die Figur 8 zeigt, dass der Lagerbehälter 39 in Pfeilrichtung 43 (Entnahmerichtung) auf das Fahrwerk 2 des Transportroboters 1 aufgezogen werden kann, und in Pfeilrichtung 43a wieder abgeschoben werden kann. Diese Lade- und Entladeaufgaben werden im Ausführungsbeispiel nach Figuren 7 und 8 von dem Mehrachsroboter 8 ausgeführt.

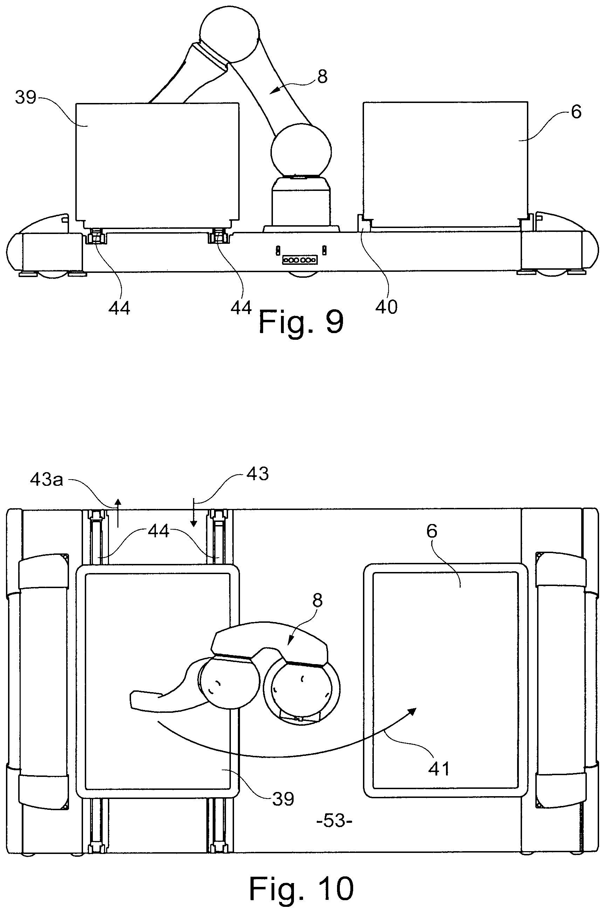

In den Figuren 9 und 10 werden derartige Lade- und Entladeaufgaben für den Lagerbehälter 39 nicht mehr vom Mehrachsroboter 8 selbst ausgeführt, sondern von einem eigenen, auf dem Fahrwerk 2 des Transportroboters 1 angeordneten ersten Lademittel 44, welches in der allgemeinen Beschreibung bereits schon beschrieben wurde.

Ein solches erstes Lademittel besteht zum Beispiel aus teleskopartig ausziehbar angetriebenen Schienen, die geeignet sind, auf die Lagerebene 35a-c im Lagerregal aufgefahren zu werden, und den Lagerbehälter 39 untergreifen, und ihn so in Pfeilrichtung 43 auf die Oberfläche des Fahrwerks 2 des Transportroboters 1 befördern.

Anstatt eines ersten Lademittels 44 können auch andere Lademittel 40 verwendet werden, die zum Beispiel auch dem Zielbehälter 6 zugeordnet sind, weil es bei sehr schweren Lagerbehältern, wo die Zugkraft und die Betätigungskraft für den Mehrachsroboter 8 nicht mehr ausreichen würde, notwendig ist, eigene Lademittel auf dem Fahrwerk 2 des Transportroboters anzuordnen, um einerseits den Lagerbehälter 39 auf der Lagerebene 35 zu entnehmen und wieder zurückzuführen, und andererseits auch den Zielbehälter 6 von dem Transportroboter 1 abzuschieben und auf diesen wieder aufzubringen.

Darüber hinaus kann es vorgesehen sein, neben dem Mehrachsroboter 8 auf dem Fahrwerk 2 des Transportroboters 1 noch einen weiteren Roboter anzuordnen, wobei beide Roboter in der Art einer Pick & Place-Betriebsweise zusammen arbeiten. Vorteilhaft ist es, den das Lagerregal bedienenden Roboter als Skalarroboter auszubilden, der eine besonders präzise Führung bei großer Reichweite und hoher Zugriffsgeschwindigkeit besitzt. Der die Lagerebene bedienende Skalarroboter als erstes Lademittel "füttert" dann den Mehrachsroboter 8 als zweites Lademittel mit den aus dem Lagerregal vereinzelten Gegenständen 25, 39, der diese dann auf einen oder mehrere Zielbehälter 6, 6a auf dem Fahrwerk 2 des Transportroboters 1 verteilt.

In den vorgenannten Ausführungsbeispielen nach den Figuren 1 bis 7 war angegeben, dass der Mehrachs-Roboter 8 als erstes Lademittel sowohl den Zugriff in die Lagerebene 35 im Lagerregal 27 ausführt, und auch die Vereinzelungsaufgaben auf der Arbeitsebene 53 des Transportroboters 1.

Im zweiten Ausführungsbeispiel nach den Figuren 9 und 10 war angegeben, dass der Mehrachs-Roboter 8 als zweites Lademittel lediglich die Kommissionieraufgaben auf der Arbeitsebene 53 des Transportroboters 1 ausführt, die Beladung und Entladung des Transportroboters mit dem Lagerbehälter 39 jedoch durch ein erstes Lademittel 44 erfolgt, welches bevorzugt als horizontal verschiebbare Transportriemen ausgebildet ist, die in der Lage sind, in horizontaler Richtung in die Lagerebene 35 des Lagerregals 27 hineinzufahren, dort einen abgestellten Gegenstand zu ergreifen und auf die Arbeitsebene 53 des Transportroboters zu verbringen.

Vorteil der zweiten Ausführungsform nach den Figuren 9 und 10 war, dass durch das erste Lademittel, nämlich dasjenige Lademittel, welches in die Lagerebene 35 hineinfährt und die Lagerbehälter 39 dort entnimmt, eine nur geringe Bauhöhe aufweist, sodass der vertikale Abstand zwischen den Lagerebenen 35a-35c minimiert werden kann, weil der eine höhere Bauhöhe erfordernde Mehrachs-Roboter 8 als zweites Lademittel außerhalb der Lagerebenen 35 agiert.

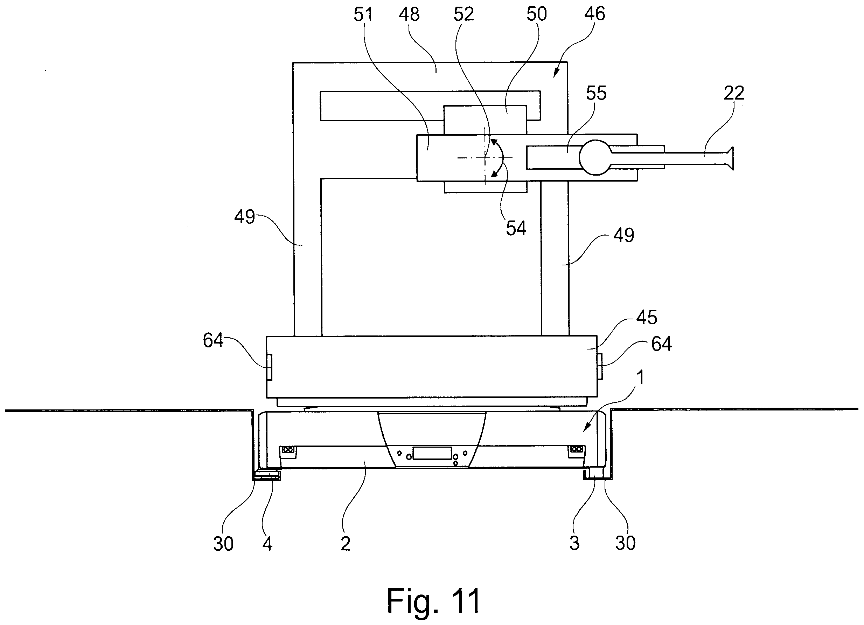

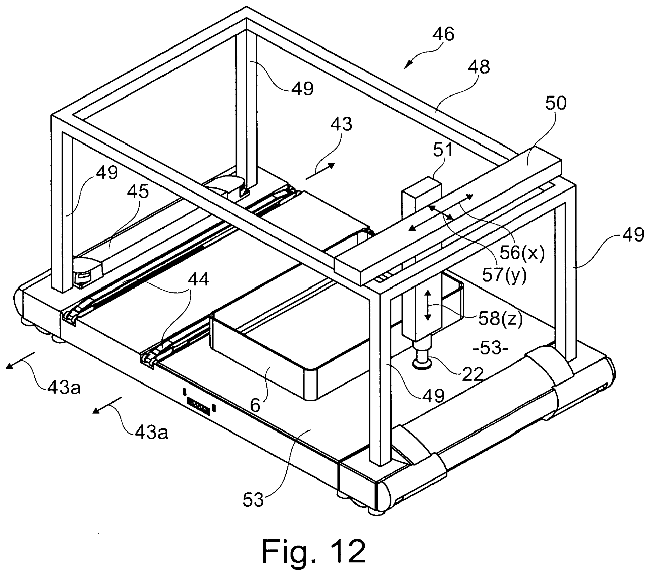

Die dritte Ausführungsform nach der Erfindung, die in den Figuren 11 bis 19 dargestellt ist, sieht den Wegfall des Mehrachs-Roboters 8 vor und sieht stattdessen eine Kommissioniervorrichtung 46 vor, die sich durch ein einfaches X-Y-Schlittensystem auszeichnet, an dem ein in vertikaler Richtung (Z-Richtung) verschiebbares und möglicherweise auch drehbar angetriebenes zweites Lademittel angeordnet ist.

Der Wegfall des Mehrachs-Roboters 8 durch eine Kommissioniervorrichtung 46, die im Wesentlichen als Portalgestell 47 mit einem Horizontalrahmen 48 ausgebildet ist, hat den Vorteil einer sehr einfachen Konstruktion und einer einfachen Ansteuerung, weil die Schlitten 50, 51 lediglich linear bewegbar angetrieben sind und nicht eine Vielzahl von verschiedenen Bewegungsachsen - wie bei einem Mehrachs-Roboter 8 erforderlich - angesteuert werden müssen. Der Steuerungsaufwand ist deshalb minimal. Aus diesem Grund kann eine hohe Umschlaggeschwindigkeit - im Vergleich zu einem Mehrachsroboter - realisiert werden.

Die Kommissioniervorrichtung 46 in der Ausbildung als Portalgestell 47 mit dort linear angetriebenen Schlitten 50, 51 hat demnach den Vorteil einer einfacheren Steuerung, einer schnelleren Kommissioniergeschwindigkeit und einem verschleißärmeren Betrieb.

Demnach zeigen die Figuren 11 bis 13 eine Kommissioniervorrichtung 46, die auf einem Sockelaufsatz 45 auf dem Fahrwerk 2 des Transportroboters 1 aufgesetzt ist, und im Wesentlichen aus einem Portalgestell 47 besteht, welches aus einem oberen umlaufenden Horizontalrahmen 48 besteht, welches mithilfe von Ständern 49 auf dem Fahrwerk 2 des Transportroboters 1 abgestützt ist.

Auf dem Horizontalrahmen 48 ist ein erster Schlitten 50 in den Pfeilrichtungen 56 verschiebbar angetrieben. Auf dem Schlitten 50 ist ein weiterer Schlitten 51 angeordnet, der in den Pfeilrichtungen 57 (Y-Richtung) verschiebbar angetrieben ist.

An dem zweiten Schlitten 51 ist ein Greifwerkzeug - im vorliegenden Fall als Sauggreifer 22 - in den Pfeilrichtungen 58 (Z-Richtung) verschiebbar angetrieben.

Somit handelt es sich um ein X-Y-Z-Schlittensystem, welches als lineares Bewegungssystem jede beliebige Stelle innerhalb der X-, Y- und Z-Koordinaten oberhalb der Arbeitsebene 53 auf dem Transportroboter 1 erreichen kann.

Auf dieser Arbeitsebene 53 ist ein Zielbehälter 6 angeordnet, und neben dem Zielbehälter ist das erste Lademittel 44 angeordnet. Es ist lediglich in horizontaler Richtung in den Pfeilrichtungen 43, 43a verschiebbar angetrieben und besteht im Wesentlichen aus zwei zueinander parallelen und in Längsrichtung verschiebbar angetriebenen Transportbändern, die zwischen zwei entgegengesetzt angeordneten Umlenkrollen angetrieben sind. Es handelt sich demnach um einen Stetigförderer der als Band- oder Längsförderer ausgebildet ist. Er kann mit Gummigurten oder Bändern arbeiten.

Der als Stetigförderer ausgebildete Transportarm kann als erstes Lademittel nunmehr in Pfeilrichtung 43 oder in Gegenrichtung 43a aus dem Transportroboter 1 seitlich herausgefahren werden und kommt somit in den Bereich der jeweiligen Lagerebene 35, 35a, 35b, 35c.

Aus Figur 11 ist noch erkennbar, dass das zweite Lademittel, welches im Ausführungsbeispiel aus einem Sauggreifer 22 besteht, noch vertikal verschiebbar im Bereich einer Verschiebebahn 55 angetrieben sein kann, und noch zusätzlich in Pfeilrichtungen 54 um eine Drehachse 52 drehend angetrieben sein kann.

Auf diese Weise ist klargestellt, dass nicht nur das erste Lademittel 44 zur Be- und Entladung von Gegenständen aus der Lagerebene 35 vorgesehen ist, sondern dass auch das zweite Lademittel mit dem Sauggreifer 22 in die Lagerebene 35 des Lagerregals 27 hineinfahren kann, und dort gegebenenfalls lagernde Gegenstände entnehmen kann.

Die Erfindung ist also nicht auf die Anordnung von zwei getrennt voneinander ansteuerbaren Lademitteln 44, 46 angewiesen, sondern es kann nach dem Ausführungsbeispiel nach Figur 11 auch vorgesehen sein, dass das Lademittel 44 entfällt und nur noch das Lademittel mit der Kommissioniervorrichtung 46 und dem X-Y-Z-Schienensystem und dem Sauggreifer 22 vorhanden ist.

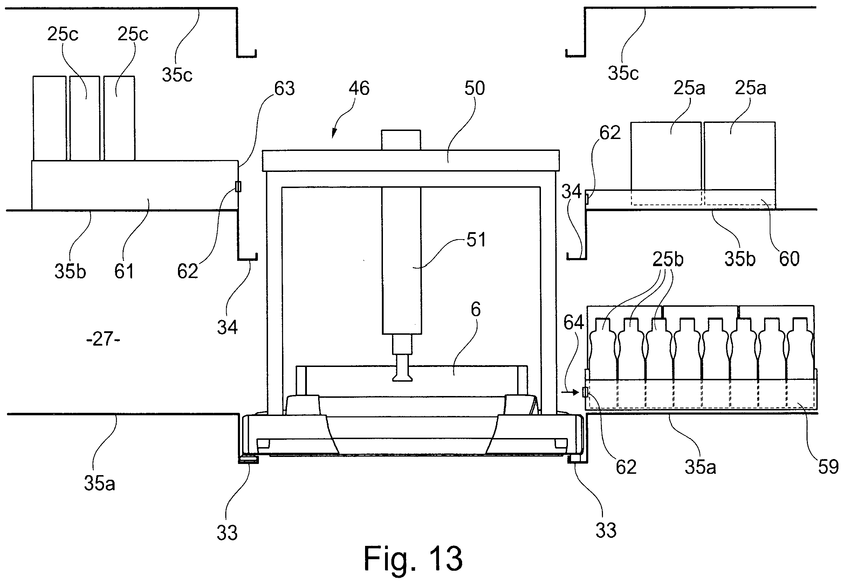

In den folgenden Ausführungsbeispielen nach den Figuren 13 bis 19 wird jedoch davon ausgegangen, dass die beiden Lademittel 44, 46 vorhanden sind und getrennt voneinander arbeiten können.

Die Figur 13 zeigt einen ersten Verfahrensschritt bei der Kommissionierung von Gegenständen, die auf verschiedenen Lagerebenen 35a, 35b, 35c in einem Lagerregal 27 angeordnet sind.

Als Beispiel ist dargestellt, dass auf der Lagerebene 35a eine Anzahl von flaschenartigen Gegenständen in Form von Verpackungseinheiten 25b in einem die Verpackungseinheiten 25b mindestens bodenseitig umhüllenden Karton 59 angeordnet sind.

Es wird bevorzugt, wenn an der Stirnseite des Kartons 59 eine berührungslos erfassbare Markierung 62 angeordnet ist, die mit einem berührungslos arbeitenden Ortungssensor 64 vonseiten des Transportroboters 1 erfassbar ist.

Eine solche Lagenerkennung des Kartons 59 auf der Lagerebene 35a kann hierbei durch optische Erkennungsmittel, kapazitive, induktive oder funkgebundene (RFID-) Sensormittel erfolgen.

Im gezeigten Ausführungsbeispiel ist auch lediglich eine erste bevorzugte Ausführungsform erkennbar, nämlich die Lokalisierung des Kartons 59 über die - bevorzugt an der Stirnseite - angeordnete kartonseitige Markierung 62.

Das Ausführungsbeispiel zeigt nicht die zweite, im allgemeinen Teil angegebene Ausführung, bei der vorgesehen ist, dass die einzelnen Gegenstände 25b selbst die frontseitigen oder stirnseitigen Markierungen 62 tragen, sodass jeder Gegenstand 25b mit seinem durch das Rastermaß des Kartons 59 vorgegebenen Standort erkannt werden kann.

In diesem Fall würde der Ortungssensor 64 direkt auf die vordere Stirnseite des jeweils zu erkennenden Gegenstandes 25b gerichtet sein, und die dort angeordnete Markierung 62 erkennen. Nachdem das Rastermaß des Kartons und der dort lagernden Gegenstände bekannt ist, kann jeder Gegenstand und sein Standort im Karton individuell erkannt werden.

Das Ausführungsbeispiel nach Figur 13 zeigt ferner, dass unterschiedliche Gegenstände auf unterschiedlichen Lagerebenen 35a, 35b, 35c angeordnet sein können.

Auf der Lagerebene 35a sind einzelne, größere Gegenstände 25a angeordnet, während auf der gegenüberliegenden Lagerebene 35b höhere Gegenstände 25c angeordnet sind, die zum Beispiel als Flaschen in Umverpackungen oder als Werkzeuge in Umverpackungen oder dergleichen ausgebildet sein können.

Bei dem Ausführungsbeispiel nach Figur 13 gibt es demnach zwei Möglichkeiten:

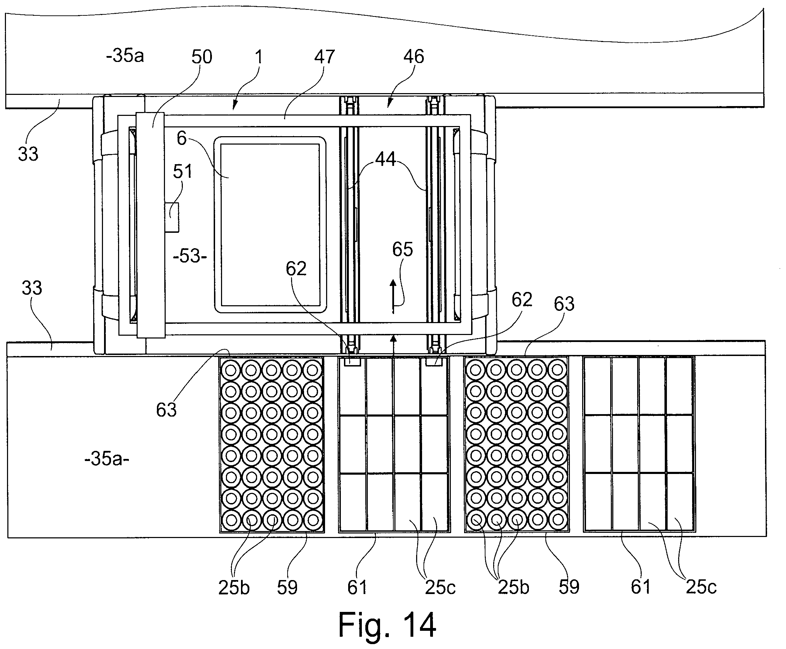

In einer ersten Ausführungsform ist vorgesehen, dass das auf dem Transportroboter 1 angeordnete erste Lademittel 44 mit seinem aus dem Transportroboter 1 seitlich herausschiebbaren Ladearmen den Karton 59 untergreift und auf die Arbeitsebene 53 des Transportroboters aufzieht. Dies ist in Figur 14 dargestellt, nachdem das erste Lademittel 44 mit seinen beiden Transportarmen über den Karton 61 gefahren ist und diesen in Pfeilrichtung 65 auf die Arbeitsebene 53 des Transportroboters 1 aufzieht.

Der Transportroboter wird dabei in genauer Gegenüberstellung zu dem zu vereinzelnden Karton 61 gebracht, in dem rasterartig eine Vielzahl von unterschiedlichen Gegenständen 25c angeordnet ist.

Dies erfolgt dadurch, dass beispielsweise an der vorderen Stirnseite des Kartons 61 ein oder mehrere der Markierungen 62 angeordnet sind, und ein oder mehrere Ortungssensoren 64 diese Markierungen millimetergenau erkennen, und der Transportroboter 1 mit seinem Fahrantrieb in genauer Gegenüberstellung zu dem Karton 61 gebracht wird. Er wird dann mit dem ersten Lademittel 44 in Pfeilrichtung 65 auf die Arbeitsebene 53 des Transportroboters 1 aufgezogen.

Wie bereits anhand der Darstellung in Figur 11 erläutert, ist es jedoch auch möglich, dass das erste Lademittel 44 entfällt und der Sauggreifer 52 an dem als zweites Lademittel ausgebildeten X-Y-Z-Schlittensystem unmittelbar den in dem Karton 61 auf der Lagerebene 35a bewahrten Gegenstand 25c ergreift und als individuellen Gegenstand auf die Arbeitsebene aufzieht.

Dies erfolgt insbesondere bei den flaschenartigen Gegenständen 25b, die in den benachbarten Kartons 59 angeordnet sind.

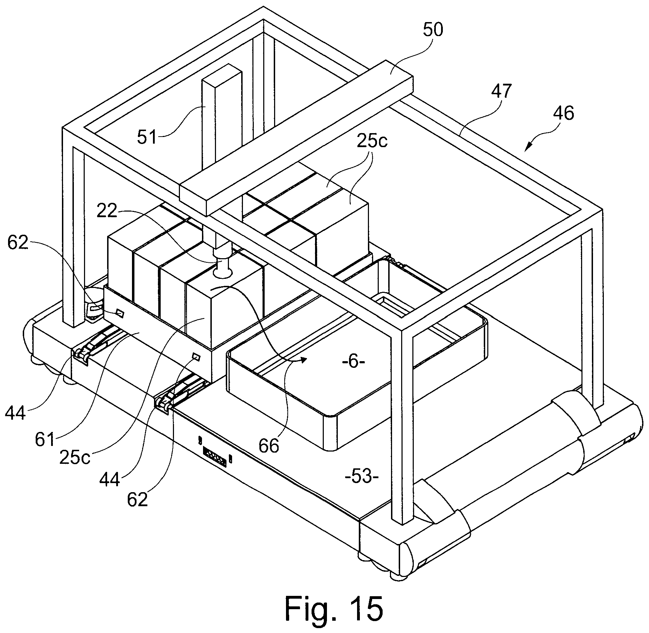

Das Ausführungsbeispiel nach Figur 14 wieder aufgreifend, wird anhand der Figur 15 erläutert, dass nunmehr der Karton 61 mithilfe des Lademittels 44 in Pfeilrichtung 65 auf die Arbeitsebene 53 des Transportroboters aufgezogen wurde, und nunmehr der Sauggreifer 22 einen der dort rasterartig angeordneten Verpackungseinheiten 25c ansaugt und in Pfeilrichtung 66 in den Zielbehälter 6 vereinzelt.

Auf diese Weise können beliebig viele der Verpackungseinheiten 25c aus dem Karton 61 entnommen werden, weil deren Lage im Karton genau fixiert ist und die Lage des Kartons 61 auf dem ersten Lademittel 44 genau definiert ist.

Es bedarf demnach keiner Kameraerkennung während der Kommissionierung. Die Kameraerkennung entfällt bei diesem Ausführungsbeispiel vollständig.

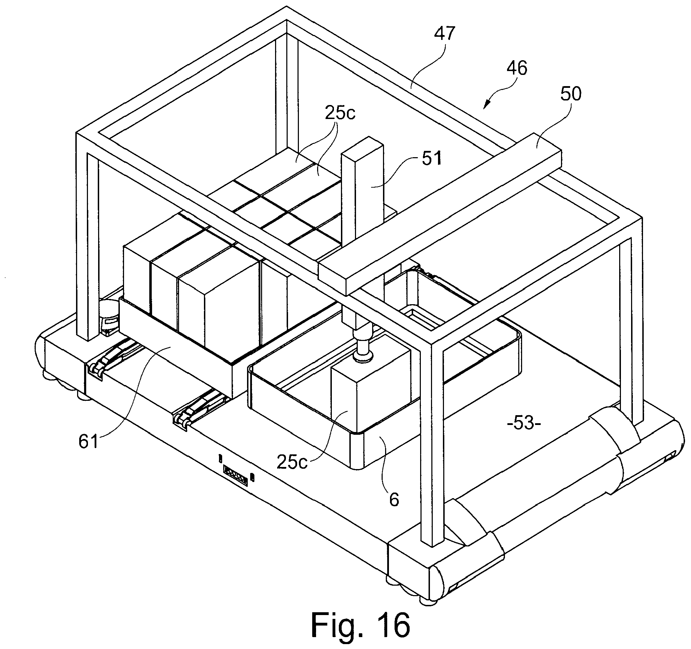

Die Figur 16 zeigt den Transport der vorderen Verpackungseinheit 25c in den Zielbehälter 6.

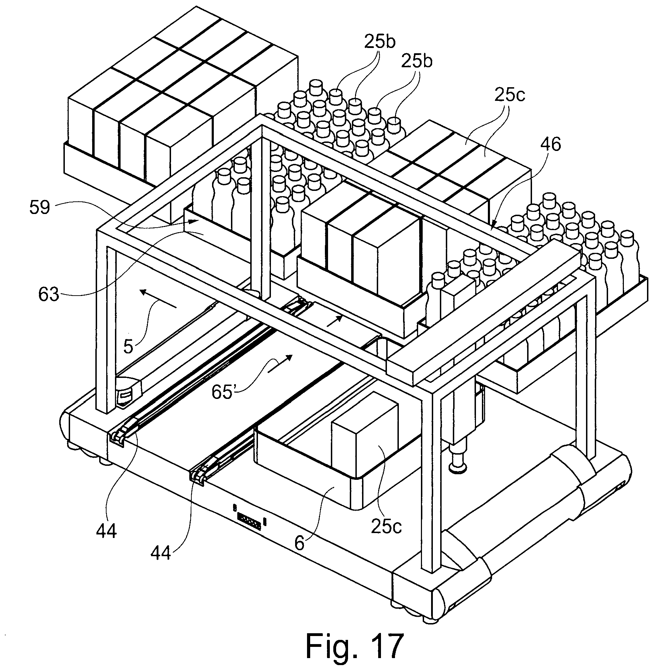

Die Figur 17 zeigt nun, dass mithilfe des horizontal auf Zug und Schub arbeitenden ersten Lademittels 44 nunmehr der Karton 61 wieder auf die Lagerebene 35a zurückgeschoben wird und dort passgenau abgesetzt wird. Somit ist seine Position auf der Lagerebene 35a genau wiederholbar festgelegt, und das Kontrollsystem des Transportroboters 1 "weiß" nun, dass im Karton 61 die vordere rechte Verpackungseinheit 25c fehlt. Somit ist der Standort aller weiteren im Karton verbleibenden Gegenstände dem Steuerungssystem bekannt.

Bei Weiterführung des Kommissionierauftrages kann nun der Transportroboter 1 auf seinem Schienenweg in Pfeilrichtung 5 in genauer Gegenüberstellung zu dem weiteren Karton 59 gebracht werden, dessen Stirnwand 63 teilweise entfernt sein kann, um die dort enthaltenen, flaschenartigen Verpackungseinheiten 25b zugänglich zu machen. Es gibt dabei die vorher beschriebenen beiden Möglichkeiten:
1. Der Karton 59 kann - wie der Karton 61 - auf die Arbeitsebene 53 des Transportroboters 1 aufgezogen werden und mithilfe des Sauggreifers in die einzelnen flaschenartigen Verpackungseinheiten 25b in dem Zielbehälter 6 vereinzelt werden.
2. In einer anderen Ausgestaltung kann es jedoch vorgesehen sein, dass der Sauggreifer 22 des zweiten Lademittels gemäß Figur 11 in die Lagerebene 35a einfährt und direkt eine solche Verpackungseinheit 25b aus dem Karton 59 entnimmt und in den Zielbehälter 6 einlegt.

Neben einer individuellen Vereinzelung von Verpackungseinheiten 25 kann deshalb auch eine Vereinzelung von Verpackungseinheiten erfolgen, die in Gebinden angeordnet sind.

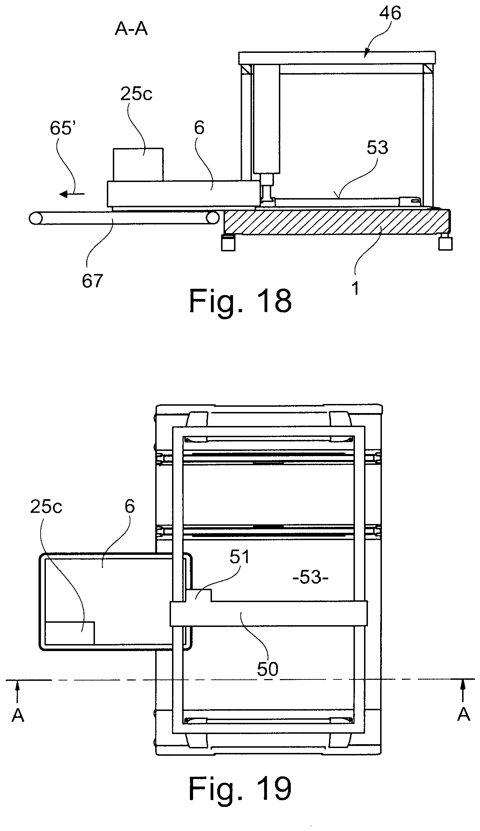

Die Figuren 18 und 19 zeigen, dass nach beendeter Kommissionieraufgabe der Transportroboter 1 seinen Zielbehälter 6 auf einen Längsförderer (Abgabeband 67) absetzen kann, wo der fertig kommissionierte Zielbehälter in Pfeilrichtung 65' aus dem Lagerregal 27 ausgeschleust wird.

Demnach hat die Erfindung den Vorteil, dass ein Transportroboter mit aufgesetzter Kommissioniervorrichtung 46 vollkommen selbsttätig Kommissionieraufgaben in einem Lagerregal ausführt, ohne das Lagerregal 27 zu verlassen oder außerhalb des Lagerregals notwendige Kommissionieraufgaben erfüllen zu müssen.

Aufgrund der raumsparenden Ausbildung der beiden Lademittel 40, 46 kann bei hoher Lagerdichte eine hohe Umschlaggeschwindigkeit erreicht werden.

### Zeichnungslegende

- 1: Transportroboter
- 2: Fahrwerk
- 3: Antriebsrad
- 4: Wegmessrad
- 5: Pfeilrichtungen
- 6: Zielbehälter a
- 7: Vakuumaggregat
- 8: Mehrachsroboter
- 9: Ständer
- 10: Drehkranz
- 11: Zwischenglied
- 12: Drehkranz
- 13: Zwischenglied
- 14: Drehkranz
- 15: Zwischenglied
- 16: Drehkranz
- 17: Zwischenglied
- 18: Drehkranz
- 19: Zwischenglied
- 20: Drehkranz
- 21: Kamerasystem
- 22: Sauggreifer
- 23: Saugmündung
- 24: Blickrichtung (von 21)
- 25: Verpackungseinheiten
- 26: Abdeckung
- 27: Lagerregal
- 28: Hublift
- 29: Hubplattform
- 30: Fahrstrecke
- 31: Abgabestelle
- 32: Pfeilrichtung 32'
- 33: Regalfahrstrecke
- 34: Regalfahrstrecke
- 35: Lagerebene a, b, c
- 36: Positionslinie
- 37: Positionslinie
- 38: Standposition a, b, c
- 39: Lagerbehälter
- 40: Lademittel
- 41: Einlegerichtung
- 42: Seitenführung
- 43: Entnahmerichtung
- 43a: Rückführrichtung
- 44: Lademittel
- 45: Sockelaufsatz
- 46: Kommissioniervorrichtung
- 47: Portalgestell
- 48: Horizontalrahmen
- 49: Ständer
- 50: Schlitten (X-Z)
- 51: Schlitten (Z)
- 52: Drehachse
- 53: Arbeitsebene (von 1)
- 54: Pfeilrichtung
- 55: Verschiebebahn (für 22)
- 56: Pfeilrichtung (X)
- 57: Pfeilrichtung (Y)
- 58: Pfeilrichtung (Z)
- 59: Karton
- 60: Palette
- 61: Karton
- 62: Markierung
- 63: Stirnwand
- 64: Ortungssensor
- 65: Pfeilrichtung 65'
- 66: Pfeilrichtung
- 67: Abgabeband

## Patentansprüche

1. Verfahren zum Betrieb eines Transportroboters (1) in einem Lagerregal (27), welches mindestens eine horizontale Regalfahrstrecke (33-34) aufweist, der mindestens eine Lagerebene (35, 35a-35c) zugeordnet ist, auf der eine Vielzahl von Gegenständen in der Art von Gebinden und/oder Kartons (59, 61) und/oder Paletten (60) und/oder einzelne Verpackungseinheiten (25, 25a-25c) gelagert sind, wobei der Transportroboter (1) mindestens eine Arbeitsebene (53) aufweist, auf der mindestens ein Zielbehälter (6, 6a) gelagert ist, der mithilfe eines roboterseitigen Lademittels (8, 40, 44, 46) in der Art eines Pick & Place-Vorgangs mit den unterschiedlichen Gegenständen (25, 59, 60, 61) befüllbar ist, **dadurch gekennzeichnet, dass**
a.) in einem ersten Verfahrensschritt der Transportroboter (1) gegenüber einer gegenstandsfesten Markierung (62) in Gegenüberstellung zu dem zu kommissionierenden Gegenstand (25, 59, 60, 61) gebracht wird,
b.) dass in einem zweiten Verfahrensschritt der zu kommissionierende Gegenstand (25, 59, 60, 61) mit einem ersten roboterseitigen Lademittel (44) auf die Arbeitsebene (53) des Transportroboters (1) gezogen wird und dass
c.) in einem dritten Verfahrensschritt der auf der Arbeitsebene (53) lagernde Gegenstand (25, 59, 60, 61) mit dem zweiten roboterseitigen Lademittel (22, 46, 47, 48, 50, 51) in den Zielbehälter (6, 6a) vereinzelt wird.

2. Verfahren nach Anspruch 1, **dadurch gekennzeichnet, dass** das erste roboterseitige Lademittel (44) lediglich in horizontaler Richtung arbeitet und dass das zweite roboterseitige Lademittel (22, 46, 47, 48, 50, 51) als lineares Schlittensystem in X, Y und Z-Richtung arbeitet.

3. Verfahren nach Anspruch 1 oder 2, **dadurch gekennzeichnet, dass** das zweite Lademittel als Kommissioniervorrichtung (46) arbeitet.

4. Verfahren nach einem der Ansprüche 1 bis 3, **dadurch gekennzeichnet, dass** das zweite Lademittel als Mehrachs-Roboter (8) arbeitet.

5. Transportroboter (1) mit mindestens einem aufgesetzten Lademittel (8, 46) zur Kommissionierung von Waren (25, 39) in einem Lagerregal (27), **dadurch gekennzeichnet, dass** der Transportroboter (1) schienengebunden ist und auf seinem Fahrwerk (2) mindestens einen Zielbehälter (6, 6a) trägt, dass auf dem Fahrwerk (2) des Transportroboters (2) mindestens das eine Lademittel (8, 46) angeordnet ist, das geeignet ist, Kommissionieraufgaben im Lagerregal (27) auszuführen und dass am Lagerregal (27) mindestens ein eingangsseitiger Hublift (28) angeordnet ist, der den Transportroboter (1) auf verschiedene Regalfahrstrecken (33, 34) im Lagerregal (27) befördert.

6. Transportroboter nach Anspruch 5, **dadurch gekennzeichnet, dass** der Transportroboter (1) mindestens zwei verschiedene Lademittel (44, 46) trägt, von denen das eine Lademittel (44) lediglich in horizontaler Richtung aus dem Transportroboter (1) in die Lagerebene (35) des Lagerregals (27) hinein erstreckbar ist und dass das zweite Lademittel als Kommissioniervorrichtung (46) mit einem in X-Y-Z-Richtung über der Arbeitsebene (53) des Transportroboters (1) bewegbaren Schlittensystem (50, 51) ausgebildet ist

7. Transportroboter nach Anspruch 5 oder 6, **dadurch gekennzeichnet, dass** die Erkennung der Position und/oder Art der aus dem Lagerregal (27) zu vereinzelnden Gegenstände (25, 59, 60, 61) durch vom Transportroboter (1) berührungslos erfassbare Markierungen (62) erfolgt, die an den Gegenständen angeordnet sind.

8. Transportroboter nach Anspruch 5 oder 6, **dadurch gekennzeichnet, dass** jede Position des in der Lagerebene (35) abgestellten Gegenstandes (25) mit einem dreidimensionalen Kamerasystem (21) erfassbar ist, und dass beim Bestücken des Lagerregals (27) die jeweilige Standposition (38) von dem Transportroboter (1) abgespeichert und zur Ansteuerung des Mehrachsroboters (8) verwendbar ist.

9. Transportroboter nach einem der Ansprüche 5 bis 8, **dadurch gekennzeichnet, dass** das zweite Lademittel als Mehrachsroboter (8) ausgebildet ist, der als Greifwerkzeug einen rohrartigen Sauggreifer (22) trägt.

10. Transportroboter nach einem der Anspruch 5 bis 9, **dadurch gekennzeichnet, dass** die zu vereinzelnden Gegenstände als Schüttgut ausgebildet sind.

11. Transportroboter nach einem der Ansprüche 5 bis 10, **dadurch gekennzeichnet, dass** als erstes Lade- und Entlademittel (40) ein Skalarroboter ausgebildet ist, der die Lade- und Entladefunktion von Gegenständen aus der Lagerebene (35) des Lagerregals (27) ausführt und die vereinzelten Gegenstände (25, 39) dem zweiten Lademittel (8, 46) zur Kommissionierung zuführt.

12. Transportroboter nach einem der Ansprüche 5 bis 11, **dadurch gekennzeichnet, dass** der Transportroboter (1) ein autonomes Steuerungs- und Kontrollsystem aufweist und lediglich die Fahr- und Kommissionieraufträge von einem zentralen Steuerungsrechner über eine Funkschnittstelle empfängt.
